Europäisches Patentamt

European Patent Office

Office européen des brevets

(19)

(11) Veröffentlichungsnummer : **0 095 146 B1**

# (12) EUROPÄISCHE PATENTSCHRIFT

(45) Veröffentlichungstag der Patentschrift :
18.09.85

(21) Anmeldenummer : 83104949.9

(22) Anmeldetag : 19.05.83

(51) Int. Cl.⁴ : **B 60 R 25/02**

(54) Vorrichtung zum Sperren einer Kraftfahrzeuglenkspindel.

Verbunden mit 83901594.8/0110907 (europäische Anmeldenummer/Veröffentlichungsnummer) durch Entscheidung vom 25.02.85.

(30) Priorität : 22.05.82 DE 3219334

(43) Veröffentlichungstag der Anmeldung :
30.11.83 Patentblatt 83/48

(45) Bekanntmachung des Hinweises auf die Patenterteilung : 18.09.85 Patentblatt 85/38

(84) Benannte Vertragsstaaten :
FR GB IT

(56) Entgegenhaltungen :
DE-C- 617 554
GB-A- 256 846
US-A- 1 592 087
US-A- 2 687 030

(73) Patentinhaber : NEIMAN S.A.
39, Avenue Marceau
F-92400 Courbevoie (FR)

(72) Erfinder : Weber, Günter
Bergerheide 54
D-5600 Wuppertal 1 (DE)

(74) Vertreter : Patentanwaltsbüro Cohausz & Florack
Postfach 14 01 47
D-4000 Düsseldorf 1 (DE)

## Beschreibung

Die Erfindung betrifft eine Vorrichtung zum Sperren der Drehbewegung einer Lenkspindel eines Kraftfahrzeuges, mit einem durch ein Schloß betätigten Sperriegel, der in der sperrenden Stellung in einer Öffnung der Lenkspindel einliegt.

Bei Kraftfahrzeugen ist es bekannt, die das Lenkrad tragende Lenkspindel durch einen radialen bolzenförmigen Sperriegel gegen Drehen zu sichern. Diese Sperriegel werden durch übliche Lenkschlösser bewegt, wobei nach vollständigem Schlüsselabzug der Sperriegel in einer Ausnehmung einer auf der Lenkspindel angeordneten Muffe einfällt. In der eingefallenen bzw. sperrenden Lage des Sperriegels liegt das vorderer freie Ende des Sperriegels in der Muffe, und der übrige Sperriegelteil ist vom Schloßgehäuse geführt. Der Sperriegel bildet damit im sperrenden Zustand eine einschnittige Verbindung bzw. Verriegelung zwischen Lenkspindel und Schloßgehäuse, die bei einem gewaltsamen Verdrehen des Lenkrades derart hohen Abscherkräften und einem Kippmoment ausgesetzt ist, daß der Sperriegel bei schon einem verhältnismäßig geringen Drehmoment entweder abgeschert wird oder aber aus der Ausnehmung der Lenkspindel herausgedrückt wird.

Aus der US-PS 2 687 030 ist es bekannt, einen Sperrbolzen die Lenkspindel durchqueren zu lassen und beidseitig festzulegen. Dies führt zu langen Wegen für den Bolzen zwischen sperrender und nicht sperrender Stellung, einer platzraubenden Bauweise und einer Schwächung der Lenkspindel.

Aufgabe der Erfindung ist es, eine Vorrichtung der eingangs genannten Art derart zu verbessern, daß bei geringen Außenabmessungen ein höheres Drehmoment der Lenkspindel aufnehmbar ist und vom Schloß Kräfte ferngehalten werden, die vom Sperrbolzen übertragen werden.

Diese Aufgabe wird erfindungsgemäß dadurch gelöst, daß der Sperriegel an einer Seite der Lenkspindel angeordnet ist, daß die Öffnung von einem auf der Lenkspindel drehfest angeordneten Vorsprung der Lenkspindel gebildet ist, und daß im Bereich der Öffnung auf beiden Seiten des Vorsprungs jeweils feststehendes Material des Kraftfahrzeuges, insbesondere des Schloßgehäuses angrenzt, das auf beiden Seiten des Vorsprungs öffnungen für den Sperriegel aufweist, wobei in der sperrenden Stellung die Öffnungen des Vorsprungs und des feststehenden Materials miteinander fluchten.

Eine in dieser Weise vor und hinter dem Lenkspindelvorsprung im feststehenden Material des Schloßgehäuses bzw. des Kraftfahrzeugs geführter Sperriegel wird an mindestens zwei Stellen auf Abscheren beansprucht, so daß eine zweischnittige Verbindung bzw. Verriegelung gegeben ist. Aufgrund dieser Führung des Sperriegels zu beiden Seiten des Lenkspindelvorsprungs sind hohe Drehmomentkräfte aufnehmbar, und darüber hinaus kommt es nicht zu einem Verkippen des Sperrbolzens. Auf das Lenkschloß werden kaum noch Kräfte übertragen.

Ferner erreicht die Vorrichtung geringe radiale und/oder axiale Abmessungen, eine hohe Sicherheit und ist insbesondere aufgrund der wenigen Teile einfach in der Herstellung. Das feststehende Material, der Sperriegel und/oder der Vorsprung können aus Kunststoff sein und sind damit preiswert herstellbar und von geringem Gewicht.

Aus der DE-PS 617 554 ist es an sich bekannt, ein Lenkrad eines Kraftfahrzeuges von der Lenkspindel abzukuppeln und für die Fahrt anzukuppeln. Für das Ankuppeln wird ein Bolzen benutzt, der beidseitig in Material des Lenkspindelkopfes einliegt. In der kuppelnden Lage werden auf diesen Bolzen keine größeren Kräfte durch Unbefugte ausgeübt, so daß die erfindungsgemäßen Probleme nicht entstehen.

Eine weitere Verbesserung der Drehmomentaufnahme wird dadurch erreicht, daß eine vierte Öffnung in der Lenkspindel vorgesehen ist, die mit den übrigen drei Öffnungen fluchtet, zur Lenkspindelachse näher liegt als die in dem Vorsprung vorgesehene Öffnung und in der sperrenden Stellung das freie Ende des Sperriegels aufnimmt.

Eine konstruktiv besonders einfache Ausführung wird dadurch erreicht, daß der Vorsprung eine Außen auf der Lenkspindel befestigte koaxiale Ringscheibe ist, die etwa rechtwinklig von der Lenkspindel absteht. Bei einer solchen Ausführung kann der Sperriegel schräg zur Lenkspindelachse verlaufen, aber auch zu dieser parallel liegen, wodurch besonders geringe radiale Abmessungen erzielt werden. Alternativ kann aber auch der Vorsprung von einem auf der Lenkspindel außen aufgesetzten hohlen, koaxialen Teil gebildet sein, dessen Wandung drehsymmetrisch zur Lenkspindelachse ist. Eine solche Ausführung eignet sich für die verschiedensten schloßarten und Sperriegelanordnungen und läßt die verschiedensten Konstruktionen des Vorsprungs zu. Dabei kann der Vorsprung von einem hohlen Kegelstumpf oder einem Glockenstumpf gebildet sein, dessen Wandung in einem Abstand zur Mantelfläche der Spindel oder eines auf der Spindel aufgesetzten Teils angeordnet ist. Alternativ kann aber auch der Vorsprung von einem Hohlzylinder oder Topf gebildet sein. Ferner wird vorgeschlagen, daß die Vandung oder Scheibe beidseitig von feststehendem Material umgriffen ist.

Die erfindungsgemäße Lösung erlaubt es, daß im Vorsprung zahlreiche Öffnungen für den Sperriegel vorgesehen sind, so daß schon nach einer Drehung des Lenkrades bzw. der Lenkspindel mit wenigen Winkelgraden der Sperriegel einfällt. Dabei können im Vorsprung zwei oder mehr Öffnungen regelmäßig über gleiche Drehwinkel angeordnet sein.

Eine weitere Erhöhung der Drehmomentenaufnahme ist dadurch erreichbar, daß der Sperriegel am freien Ende zwei zueinander parallele Bolzen bildet, die im sperrenden Zustand in getrennte Öffnungen des Vorsprungs hineinreichen. Ferner können hierzu zwei oder mehr Sperriegel parallel nebeneinander oder auf einander zur Lenkspindel diametral gegenüberliegenden Seiten angeordnet sein.

Zur Verbesserung der Drehmomentenaufnahme können aber nicht nur die Zahl der Sperriegel, sondern auch die Anzahl der Vorsprünge auf der Lenkspindel erhöht werden, so daß z. B. mehrere Vorsprünge nebeneinander auf der Lenkspindel befestigt sein können, wobei ein Sperriegel für mehrere Vorsprünge odere für jeden Vorsprung ein separater Sperriegel vorgesehen sein kann.

Unter Öffnungen werden im gesamten Patentbegehren auch Ausnehmungen, Schlitze oder Nuten verstanden. So können auch in einer konstruktiv besonders vorteilhaften Ausführung die Öffnungen des Vorsprungs oder der Vorsprünge der Lenkspindel und/oder des feststehenden Materials von Schlitzen oder den Zwischenräumen von Zähnen insbesondere eines oder mehrerer Zahnräder gebildet sein.

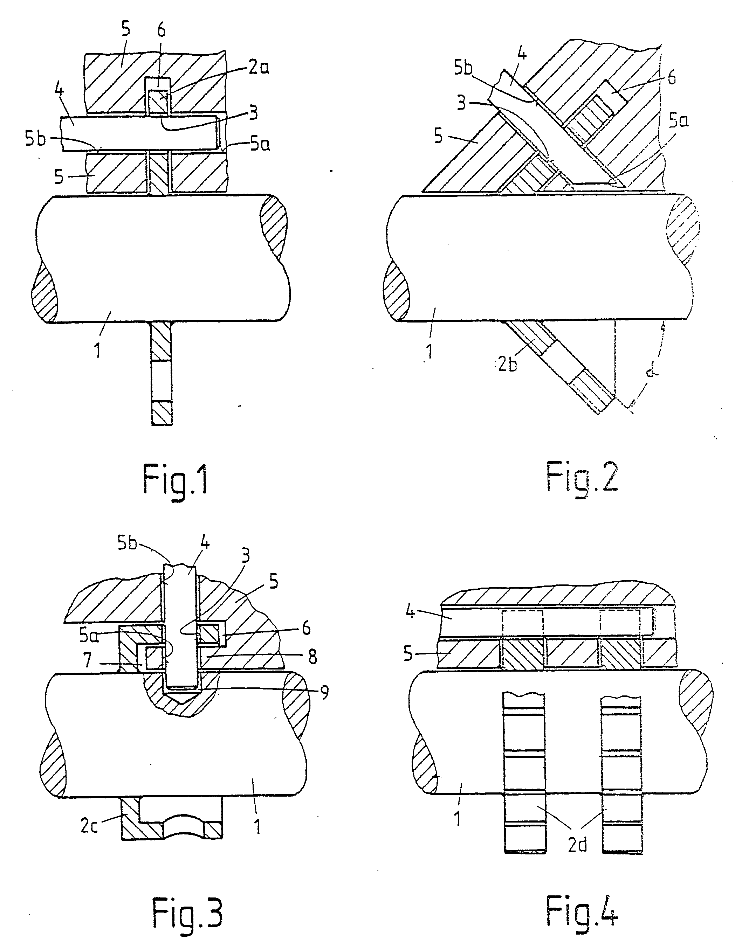

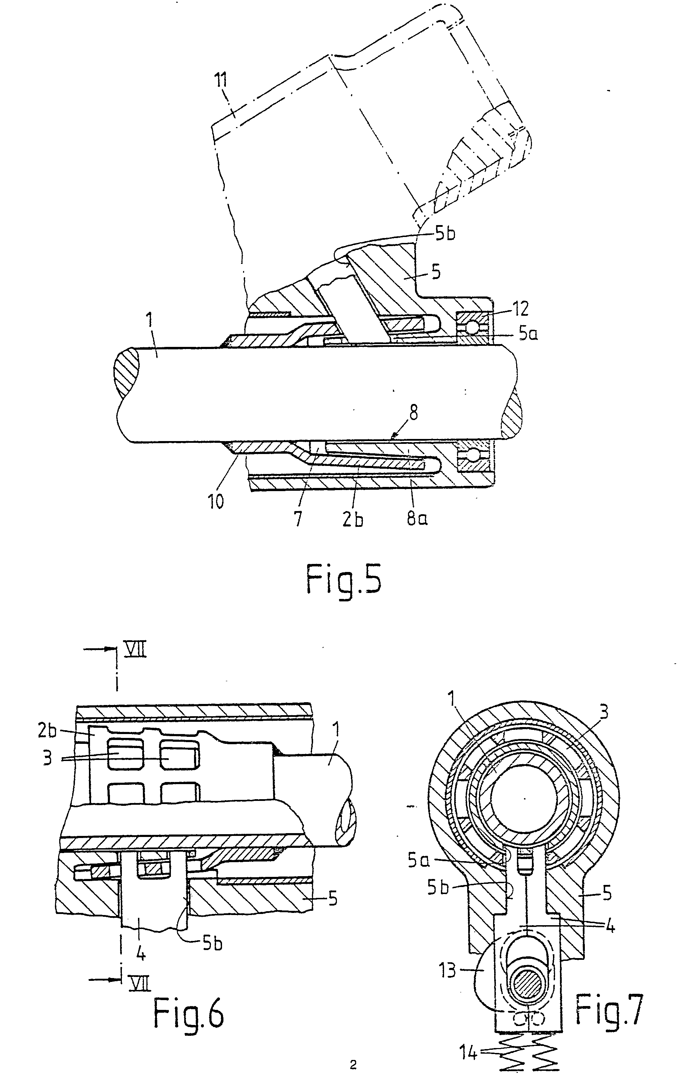

Als weitere Alternative wird vorgeschlagen, den Sperriegel so anzuordnen, daß er von der Sperrstellung in die entsperrte Stellung und umgekehrt parallel zu seiner Längsachse verschieblich ist. Dies ist z. B. bei den Beispielen nach den Figuren 4 und 5 anwendbar und führt nicht nur zu einer sehr kompakten Bauweise sondern läßt auch eine besonders hohe Zahl von Absperrstellen (vielschnittige Verbindung) zu. Insbesondere können viele und/oder sehr breite Vorsprünge auf der Lenkspindel befestigt sein, die eine oder mehrere Öffnungen für den Sperriegel bilden.

Ausführungsbeispiele der Erfindung sind in den Zeichungen dargestellt und werden im folgenden näher beschrieben. Es zeigen :

Figur 1   einen axialen Schnitt durch eine Lenkspindel mit ring- oder scheibenförmigem Vorsprung ;

Figur 2   eine Lenkspindel mit einem Vorsprung in Form eines hohlen Kegelstumpfes oder Glockenstumpfes ;

Figur 3   einen Vorsprung in Form eines Hohlzylinders, Topfes oder einer Buchse ;

Figur 4   Vorsprünge in Form von Zahnrädern ;

Figur 5   einen glocken- oder kegelstumpfförmigen Vorsprung mit geringem Zwischenraum zwischen der Wandung des Vorsprungs und der Lenkspindeloberfläche ;

Figur 6   einen Vorsprung nach Fig. 5, mit paarweise angeordneten Öffnungen für Sperriegel mit gabelförmigem Ende, wobei im oberen Teil der Figur der Kegel- oder Glockenstumpf in einer Ansicht und im unteren im Schnitt dargestellt ist ;

Figur 7   einen Schnitt nach VII-VII in Fig. 6, mit zwei zueinander parallel angeordneten Sperriegeln ;

Figur 8   einen scheibenförmigen Vorsprung ;

Figur 9   einen Schnitt nach IX-IX in Fig. 8 ;

Figur 10   einen topfförmigen Vorsprung mit von der Innenseite her in Öffnungen des Topfrandes eingreifendem Sperriegel ; und

Figur 11   einen Vorsprung nach Fig. 10, mit zwei von innen eingreifenden Sperriegeln.

Auf einer rohrförmigen Lenkspindel 1 eines Kraftfahrzeuges ist ein Vorsprung in Form einer Ringscheibe 2a aufgeschweißt. Diese zur Lenkspindelachse koaxiale Ringscheibe kann auch alternativ zur Ausführung in Fig. 1 auf einer Buchse befestigt oder an dieser angeformt sein, die wiederum auf den Lenkspindelrohr aufgeschoben und angeschweißt ist. Die rechtwinklig von der Lenkspindel abstehende Scheibe 2a weist regelmäßig über den gesamten Umfang in gleichen Teilungsabständen Öffnungen 3 auf, die alle denselben Abstand zur Lenkspindelachse besitzen und in ihrem Durchmesser etwas größer sind als ein bolzenförmiger Sperriegel 4, der in Fig. 1 parallel zur Lenkspindelachse beweglich in Bohrungen 5a, 5b von feststehendem Material 5 geführt ist. Das Material 5 kann vom Gehäuse eines Lenkschlosses gebildet sein, das das Sperriegel 4 betätigt. Alternativ kann aber auch das Material 5 vom Gehäuse der Lenksäule oder einem anderen feststehenden Teil des Kraftfahrzeugs gebildet werden. Es kann, wie auch der Vorsprung bzw. die Ringscheibe 2a, aus einem Metall als auch aus Kunststoff sein.

Das Material 5 bildet einen Schlitz 6 nur wenig größerer Breite als die Dicke des Vorsprunges bzw. der Ringscheibe 2a. Das Material 5 liegt damit zu beiden Seiten nahe der Scheibe 2a, so daß auf beiden Seiten dem Sperriegel 4 ein sicherer Halt gegeben ist. Der Sperriegel 4 kann auch schräg zur Lenkspindelachse geführt sein, ähnlich Fig. 2, wobei dann die Öffnungen 5a, 5b im Material 5 und die Öffnungen 3 weiterhin miteinander fluchten, aber entsprechend schräg zur Lenkspindelachse liegen.

Das Ausführungsbeispiel nach Fig. 2 unterscheidet sich von dem nach Fig. 1 im wesentlichen nur dadurch, daß der Vorsprung von einem koaxialen Kegelstumpf 2b oder Glockenstumpf gebildet ist, der wiederum in einen entsprechend geformten Schlitz 6 des feststehenden Materials hineinreicht und von einem schräg zur Lenkspindelachse angeordneten Sperriegel 4 durchdrungen ist, wobei wiederum der Sperriegel 4 in regelmäßig in der Wandung des Stumpfes angeordneten Öffnungen 3 in der sperrenden Stellung einliegt. Der Winkel 2, den der Mantel des hohlen Kegelstumpfes 2b mit der Lenkspindelachse bildet, kann zwischen 90° und 0° groß sein. Dabei kann der Sperriegel 4 rechtwinklig oder schräg zur Kegelstumpfmantelfläche liegen.

In dem Ausführungsbeispiel nach Fig. 3 wird der Vorsprung von einem koaxialen Topf, Buchse oder Hohlzylinder 2c gebildet, dessen Innendurchmesser größer ist als der Außendurchmesser der Lenkspindel oder einer auf der Lenkspindel drehfest aufsitzenden Buchse, an der der Zylinder 2c befestigt sein kann. Zwischen dem Zylinder 2c und der Lenkspindel 1 bzw. der nicht dargestellten, auf der Lenkspindel aufsitzenden Buchse befindet sich ein Ringspalt 7, in den eine Zunge oder Wandungsabschnitt 8 des feststehenden Materials 5 parallel zur Lenkspindel hineinreicht. Außen am Zylinder 2c grenzt mit geringem Abstand feststehendes Material 5 an, wobei im Material 5, der Zunge 8 und im Zylinder 2c Öffnungen oder Bohrungen 3, 5a und 5b eingebracht sind, die etwa denselben Durchmesser aufweisen und in denen im sperrenden Zustand der Sperriegel 4 einliegt. Der Sperriegel 4 kann, wie in Fig. 3 dargestellt, radial zur Lenkspindel 1 angeordnet sein. Alternativ kann der Sperriegel 4 aber auch schräg zur Lenkspindel 1 liegen, wobei dann die Bohrungen bzw. Öffnungen entsprechend angeordnet sind.

Wie in Fig. 3 dargestellt, kann zusätzlich zu den drei Öffnungen 3, 5a und 5b eine weitere Öffnung 9 in der Lenkspindel bzw. in einer auf der Lenkspindel angebrachten, nicht dargestellten Buchse vorgesehen sein, die das äußerste freie Ende des Sperriegels 4 aufnimmt, wodurch eine dreischnittige Verbindung bzw. Verriegelung erzeugt wird. Die von einer Sackbohrung gebildete Öffnung 9 fluchtet mit der Öffnung 3 und in der sperrenden Lage zusätzlich mit den Öffnungen 5a und 5b. In allen Ausführungsbeispielen der Figuren 1 bis 11 braucht das Material nicht nur an einer oder wenigen Stellen den Vorsprung zu übergreifen, sondern es kann auch rundum ringförmig einen Schlitz für den Vorsprung bilden.

Das Ausführungsbeispiel nach Fig. 4 unterscheidet sich von dem nach Fig. 1 nur im wesentlichen dadurch, daß zwei Ringscheiben vorgesehen sind, die auf dem Umfang jeweils Zähne tragen, so daß von Zahnrädern 2d gesprochen werden kann. Der Sperriegel 4 liegt damit nicht in geschlossenen Öffnungen, sondern in den Zwischenräumen zwischen den Zähnen ein.

Das Ausführungsbeispiel nach Fig. 5 unterscheidet sich von dem nach Fig. 2 dadurch, daß ein geringer Winkel 2 gebildet wurde und der Vorsprung bzw. Kegelstumpf 2b an einer Buchse 10 angeformt ist. Zusätzlich ist oberhalb der Lenkspindel schematisch das Schloßgehäuse 11 dargestellt. Ferner sind hier die geringen radialen und axialen Abmessungen der Sperrvorrichtung deutlich. Der kegelstumpfförmige Vorsprung 2b liegt nahe des dem Lenkrad zugewandten Kugellagers 12 für die Lenkspindel 1. In dem ringförmigen Spalt zwischen Kegelstumpf 2b und Lenkspindel 1 liegt die Zunge 8 des feststehenden Materials bzw. des Schloßgehäuses ring- oder durch buchsenförmig ein. Dabei kann dieser Ring 8a entsprechend dem Ringspalt 7 zum Lenkrad hin in der Breite bzw. Durchmesser zunehmen.

Das Ausführungsbeispiel nach Fig. 6 unterscheidet sich von dem nach Fig. 5 im wesentlichen nur dadurch, daß im kegelstumpfförmigen Vorsprung 2b jeweils zwei Öffnungen nebeneinander paarweise angeordnet sind, um die beiden freien Enden eines gabelförmigen Sperriegels 4 in getrennten Öffnungen aufnehmen zu können. Entsprechend Fig. 7 können auch zwei Sperriegel nebeneinander angeordnet sein, die entweder in dieselben Öffnungen einfallen oder aber einen zwischen zwei Öffnungen befindlichen Steg übergreifen. Der oder die Sperriegel 4 werden von einem Exzenter 13 in Längsrichtung gegen den Druck von Federn 14 radial betätigt.

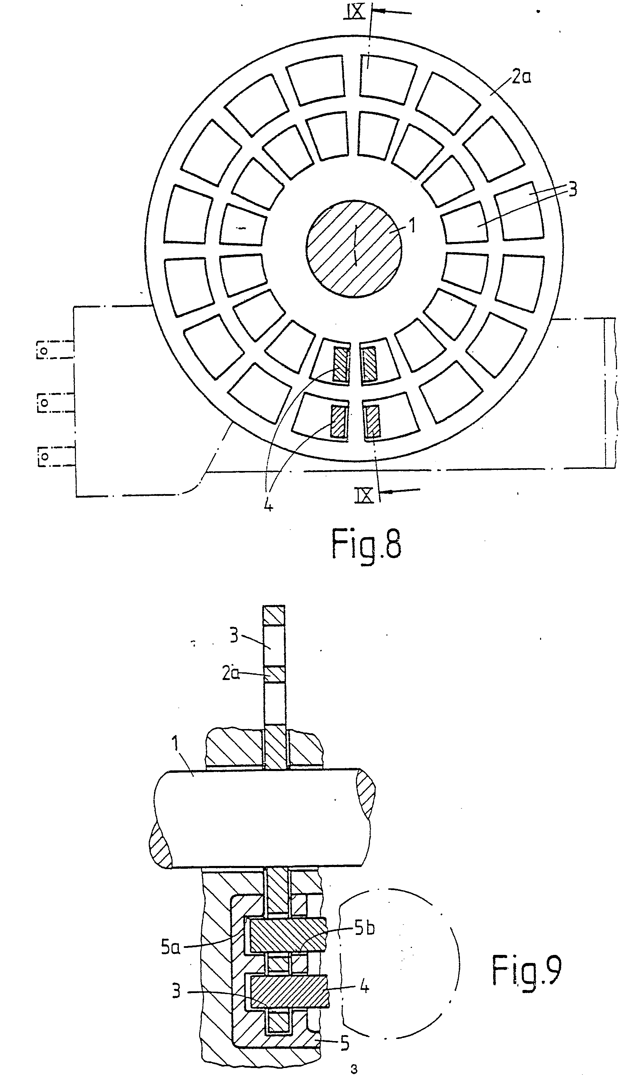

Das Ausführungsbeispiel nach Fig. 8 unterscheidet sich von dem nach Fig. 1 dadurch, daß in der Ringscheibe 2a die Öffnungen 3 paarweise angeordnet sind, um zwei gabelförmige Sperriegel 4 aufnehmen zu können, oder aber um vier getrennte Sperriegel aufzunehmen, die durch ein einziges Lenkschloß gesteuert werden. Das Lenkschloß ist, wie in den Figuren 8 und 9 dargestellt, rechtwinklig zur Lenkspindel angeordnet.

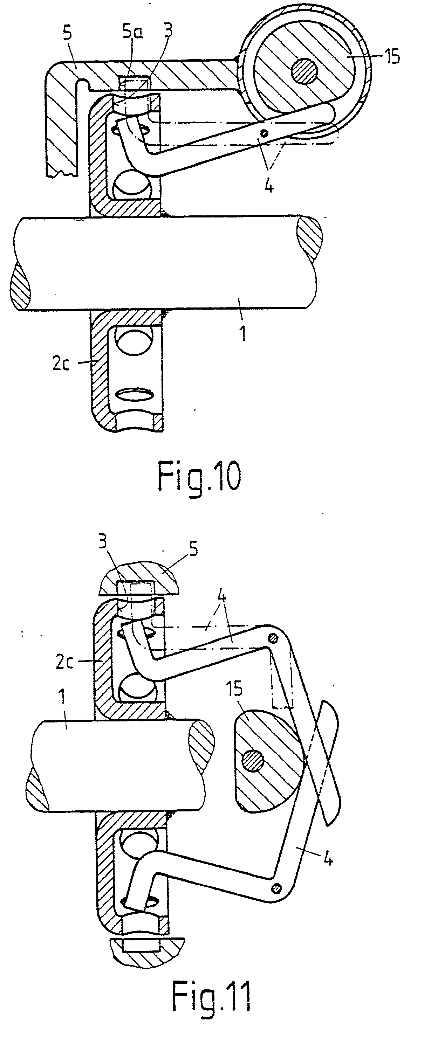

Im Ausführungsbeispiel nach den Figuren 10 und 11 ist ein topfförmiger Vorsprung 2c koaxial auf der Lenkspindel 1 befestigt, wobei in der zylindrischen Außenwandung des Topfes wiederum, wie auch in Fig. 3 dargestellt, die Öffnungen 3 für den Sperriegel 4 vorgesehen sind. Allerdings ist bei diesem Ausführungsbeispiel der Abstand der Topfoder Zylinderinnenwandung größer als bei Fig. 3, so daß es möglich ist, einen Sperriegel in Form eines zweiarmigen Hebels von innen nach außen die Öffnung 3 durchdringen zu lassen. Das etwa um 90° abgebogene freie Ende des Sperriegels durchdringt dabei die Öffnung 3 der Zylinderwandung so weit, daß das freie Ende in eine Sackbohrung des feststehenden Materials eindringt. Der zweiarmige Hebel kann zumindest nahe der Öffnung 3 im Innenbereich des Topfes zu beiden Seiten von feststehendem Material umgeben sein, insbesondere in einem Schlitz des feststehenden Materials beweglich einliegen, um dem Hebel zusätzlichen Halt zu geben. Das dem sperrenden Ende gegenüberliegende Ende des hebelförmigen Sperriegels 4 wird von einem Exzenter 15 betätigt.

Das Ausführungsbeispiel nach Fig. 11 unterscheidet sich von dem nach Fig. 10 dadurch, daß der Tops oder Hohlzylinder 2c auf einander diametral gegenüberliegenden Seiten von zwei hebelförmigen Sperriegeln 4 sperrbar ist. Dabei werden die beiden Winkelhebel von einem einzigen Exzenter betätigt, der zwischen den beiden Hebeln liegt.

**Patentansprüche**

1. Vorrichtung zum Sperren der Drehbewegung einer Lenkspindel (1) eines Kraftfahrzeuges, mit einem durch ein Schloß betätigten Sperriegel (4), der in der sperrenden Stellung in einer Öffnung (3) der Lenkspindel (1) einliegt, dadurch gekennzeichnet, daß der Sperriegel (4) an einer Seite der Lenkspindel (1) angeordnet ist, daß die Öffnung (3) von einem auf der Lenkspindel drehfest angeordneten Vorsprung der Lenkspindel gebildet ist, und daß im Bereich der Öffnung (3) auf beiden Seiten des Vorsprungs (2a-2d) jeweils feststehendes Material (5) des Kraftfahrzeuges, insbesondere des Schloßgehäuses angrenzt, das auf beiden Seiten des Vorsprungs Öffnungen (5a, 5b) für den Sperriegel (4) aufweist, wobei in der sperrenden Stellung die Öffnungen (3, 5a, 5b) des Vorsprungs und des feststehenden Materials miteinander fluchten.

2. Vorrichtung nach Anspruch 1, dadurch gekennzeichnet, daß eine vierte Öffnung (9) in der Lenkspindel (1) vorgesehen ist, die mit den übrigen drei Öffnungen (3, 5a, 5b) fluchtet, zur Lenkspindelachse näher liegt als die in dem Vorsprung (2a-d) vorgesehene Öffnung und in der sperrenden Stellung das freie Ende des Sperriegels aufnimmt.

3. Vorrichtung nach Anspruch 1 oder 2, dadurch gekennzeichnet, daß der Vorsprung eine außen auf der Lenkspindel (1) befestigte koaxiale Ringscheibe (2a) ist, die etwa rechtwinklig von der Lenkspindel absteht.

4. Vorrichtung nach Anspruch 1 oder 2, dadurch gekennzeichnet, daß der Vorsprung von einem auf der Lenkspindel außen aufgesetzten hohlen, koaxialen Teil (2b, 2c) gebildet ist, dessen Wandung oder Fläche drehsymmetrisch zur Lenkspindelachse ist.

5. Vorrichtung nach Anspruch 4, dadurch gekennzeichnet, daß der Vorsprung von einem hohlen Kegelstumpf (2b) oder einem Glockenstumpf gebildet ist, dessen Wandung in einem Abstand zur Mantelfläche der Spindel (1) oder eines auf der Spindel aufgesetzten Teils angeordnet ist.

6. Vorrichtung nach Anspruch 4, dadurch gekennzeichnet, daß der Vorsprung von einem Hohlzylinder (2c) oder Topf gebildet ist.

7. Vorrichtung nach Anspruch 3, dadurch gekennzeichnet, daß die Wandung oder Scheibe (2a) beidseitig von feststehendem Material (5) umgriffen ist.

8. Vorrichtung nach einem der Ansprüche 1 bis 7, dadurch gekennzeichnet, daß im Vorsprung (2a-d) zwei oder mehr Öffnungen (3) regelmäßig über gleiche Drehwinkel angeordnet sind.

9. Vorrichtung nach einem der Ansprüche 1 bis 7, dadurch gekennzeichnet, daß der Sperriegel (4) am freien Ende zwei zueinander parallele Bolzen bildet, die im sperrenden Zustand in getrennte Öffnungen (3) des Vorsprungs hineinreichen.

10. Vorrichtung nach einem der Ansprüche 1 bis 9, dadurch gekennzeichnet, daß zwei oder mehr Sperriegel (4) parallel nebeneinander oder auf einander zur Lenkspindel diametral gegenüberliegenden Seiten angeordnet sind.

11. Vorrichtung nach einem der Ansprüche 1 bis 10, dadurch gekennzeichnet, daß mehrere Vorsprünge (2a-d) nebeneinander auf der Lenkspindel (1) befestigt sind.

12. Vorrichtung nach einem der Ansprüche 1 bis 11, dadurch gekennzeichnet, daß die Öffnungen (3, 5a, 5b) des Vorsprungs oder der Vorsprünge (2a-d) der Lenkspindel (1) und/oder des feststehenden Materials (5) von Schlitzen oder den Zwischenräumen von Zähnen insbesondere eines oder mehrerer Zahnräder (2d) gebildet sind.

13. Vorrichtung nach einem der Ansprüche 1 bis 12, dadurch gekennzeichnet, daß von der Sperrstellung in die entsperrte Stellung und in umgekehrter Richtung der Sperriegel parallel zu seiner Längsachse verschieblich ist.

## Claims

1. Device for locking the rotating movement of a steering spindle (1) of a motor vehicle, having a locking bolt (4) actuated by a lock and lying, in the locking position, in an opening (3) of the steering spindle (1), characterised in that the locking bolt (4) is arranged on one side of the steering spindle (1), in that the opening (3) is formed by a projection of the steering spindle arranged fast in rotation on the steering spindle, and in that in the region of the opening (3) stationary material (5) of the motor vehicle, especially of the lock housing, adjoins each of the two sides of the projection (2a-2d), which material comprises openings (5a, 5b) on both sides of the projection for the locking bolt (4), the openings (3, 5a, 5b) of the projection and of the stationary material being in alignment with one another in the locking position.

2. Device according to Claim 1, characterised in that a fourth opening (9) is provided in the steering spindle (1), which opening is aligned with the other three openings (3, 5a, 5b), lies closer to the steering spindle axis than does the opening provided in the projection (2a-2d) and in the locking position accommodates the free end of the locking bolt.

3. Device according to Claim 1 or 2, characterised in that the projection is a coaxial annular disc (2a) secured externally on the steering spindle (1) and protruding approximately at right angles from the steering spindle.

4. Device according to claims 1 and 2, characterised in that the projection is formed by a hollow, coaxial part (2b, 2c) set externally upon the steering spindle, the wall or surface of which part is rotationally symmetrical in relation to the axis of the steering spindle.

5. Device according to Claim 4, characterised in that the projection is formed by a hollow cone frustum (2b) or a bell frustum the wall of which is arranged at a distance from the circumferential surface of the spindle (1) or of a part fitted on to the spindle.

6. Device according to Claim 4, characterised in that the projection is formed by a hollow cylinder (2c) or pot.

7. Device according to Claim 3, characterised in that the wall or disc (2a) is grasped around on both sides by stationary material (5).

8. Device according to one of Claims 1 to 7, characterised in that two or more openings (3) are arranged regularly over equal angles of rotation in the projection (2a-d).

9. Device according to one of Claims 1 to 7, characterised in that the locking bolt (4) forms at the free end two mutually parallel bolts which in the locking condition reach into separate openings (3) of the projection.

10. Device according to one of Claims 1 to 9, characterised in that two or more locking bolts (4) are arranged parallel side by side or on sides lying diametrically opposite to one another in relation to the steering spindle.

11. Device according to one of Claims 1 to 10, characterised in that several projections (2a-d) are secured side by side on the steering spindle (1).

12. Device according to one of Claims 1 to 11, characterised in that the openings (3, 5a, 5b) of the projection or projections (2a-d) of the steering spindle (1) and/or of the stationary material (5) are formed by slots or the interspaces of teeth espeially of one or more toothed wheels (2d).

13. Device according to one of claims 1 to 12, characterised in that the locking bolt is displaceable parallel to its longitudinal axis from the locking position into the unlocked position and in the converse direction.

## Revendications

1. Dispositif de blocage de la rotation d'un arbre de direction (1) d'un véhicule automobile, avec un pêne de verrouillage (4) actionné par une serrure qui est logé, en position de verrouillage, dans une ouverture (3) de l'arbre de direction (1), caractérisé en ce que le pêne de verrouillage (4) est disposé d'un côté de l'arbre de direction (1), que l'ouverture (3) est formée par une saillie de l'arbre de direction montée solidaire en rotation sur l'arbre de direction, et que, dans la zone de l'ouverture (3), des deux côtés de la saillie (2a-2d), un matériau (5) fixe du véhicule automobile, en particulier du boîtier de serrure, est adjacent, qui présente des deux côtés de la saillie des ouvertures (5a, 5b) pour le pêne de verrouillage, les ouvertures (3, 5a, 5b) de la saillie et du matériau fixe étant alignées les unes avec les autres en position de verrouillage.

2. Dispositif selon la revendication 1, caractérisé en ce qu'une quatrième ouverture (9) est prévue dans l'arbre de direction (1), laquelle est alignée avec les trois autres ouvertures (3, 5a, 5b), est plus proche de l'axe de l'arbre de direction que l'ouverture prévue dans la saillie (2a-d) et reçoit l'extrémité libre du pêne de verrouillage en position de verrouillage.

3. Dispositif selon la revendication 1 ou 2, caractérisé en ce que la saillie est un disque annulaire (2a) fixé coaxialement à l'extérieur sur l'arbre de direction (1), qui est sensiblement orthogonal à l'arbre de direction.

4. Dispositif selon la revendication 1 ou 2, caractérisé en ce que la saillie est formée par une pièce (2b, 2c) creuse coaxiale montée extérieurement sur l'arbre de direction, dont la paroi ou surface est symétrique de révolution par rapport à l'axe de l'arbre de direction.

5. Dispositif selon la revendication 4, caractérisé en ce que la saillie est formée par un tronc de cône (2) ou un cône en cloche, dont la paroi est disposée à une certaine distance de la surface d'enveloppe de l'arbre de direction (1) ou d'une pièce montée sur l'arbre.

6. Dispositif selon la revendication 4, caractérisé en ce que la saillie est formée par un cylindre creux (2c) ou cuvette.

7. Dispositif selon la revendication 3, caractérisé en ce que la paroi ou le disque (2a) sont entourés des deux côtés par du matériau fixe (5).

8. Dispositif selon l'une des revendications 1 à 7, caractérisé en ce que deux ouvertures (3) ou plus sont disposées régulièrement sous le même angle de rotation dans la saillie (2a-d).

9. Dispositif selon l'une des revendications 1 à 7, caractérisé en ce que le pêne de verrouillage (4) forme, à son extrémité libre, deux verrous parallèles entre eux qui, en position de verrouillage, pénètrent dans deux ouvertures (3) séparées de la saillie.

10. Dispositif selon l'une des revendications 1 à 9, caractérisé en ce que deux pênes de verrouillage (4) ou plus sont disposés parallèles côte à côte ou l'un au-dessus de l'autre sur des faces diamétralement opposées par rapport à l'arbre de direction.

11. Dispositif selon l'une des revendications 1 à 10, caractérisé en ce que plusieurs saillies (2a-D) sont fixées côte à côte sur l'arbre de direction (1).

12. Dispositif selon l'une des revendications 1 à 11, caractérisé en ce que les ouvertures (3, 5a, 5b) de la saillie ou des saillies (2a-d) de l'arbre de direction (1) et/ou du matériau fixe (5) sont formées par des fentes ou les intervalles de dents, en particulier d'un ou plusieurs pignons (2d).

13. Dispositif selon l'une des revendications 1 à 12, caractérisé en ce que le pêne de verrouillage peut coulisser parallèlement à son axe longitudinal de la position de verrouillage à la position de déverrouillage et en sens contraire.

Fig.1

Fig.2

Fig.3

Fig.4

Fig.5

Fig.6

Fig.7

0 095 146

Fig.8

Fig.9

Fig.10

Fig.11